# EUROPÄISCHE PATENTSCHRIFT

(11) **EP 2 506 957 B1**
(45) Veröffentlichungstag und Bekanntmachung des Hinweises auf die Patenterteilung: **02.09.2015**
(21) Anmeldenummer: 10773077.2
(22) Anmeldetag: 02.11.2010
(51) Int. Cl.: B01D 69/12, B01D 71/70, B01D 67/00

(54) **KOMPOSIT-SILICONMEMBRANEN MIT HOHER TRENNWIRKUNG**
COMPOSITE SILICONE MEMBRANES WITH HIGH SEPARATING ACTION
MEMBRANES COMPOSITES À BASE DE SILICONE, PRÉSENTANT UN EFFET DE SÉPARATION ÉLEVÉ

(30) Priorität: 01.12.2009 DE 102009047351
(43) Veröffentlichungstag der Anmeldung: 10.10.2012
(73) Patentinhaber: Evonik Degussa GmbH, 45128 Essen (DE)
(72) Erfinder: HAENSEL, Rene, 46282 Dorsten (DE); DOEHLER, Hardi, 45145 Essen (DE); SCHWAB, Peter, 45133 Essen (DE); SEIDENSTICKER, Peter, 42697 Solingen (DE); FERENZ, Michael, 45147 Essen (DE); BAUMGARTEN, Goetz, 45721 Haltern am See (DE); LAZAR, Marina, 45665 Recklinghausen (DE); UNGERANK, Markus, A-4320 Perg (AT)
(86) Internationale Anmeldenummer: PCT/EP2010/066604
(87) Internationale Veröffentlichungsnummer: WO 2011/067054

(56) Entgegenhaltungen:
- EP-A2- 0 979 851
- EP-A2- 1 741 481

## Beschreibung

### Stand der Technik

Siliconmembranen eignen sich für eine Vielzahl von Trennprozessen. Ein Vorteil von Siliconmembranen ist insbesondere, dass sie resistent gegenüber einer Reihe organischer Lösemittel sind und daher zumeist problemlos in lösemittelbasierten Membranprozessen z.B. der organophilen Nanofiltration oder der Gas-Separation eingesetzt werden können. Bei der lösemittelbasierten Nanofiltration handelt es sich um einen druckgetriebenen Separationsprozess auf der Basis von Membranen, der in organischen Lösungsmitteln gelöste Moleküle auf molekularer Ebene trennt. Zurzeit werden Lösemittel-resistente Membranen insbesondere in der Nahrungsmittelindustrie, der Petrochemie, der Chemieindustrie und zur Herstellung pharmazeutischer Wirkstoffe in der Pharmaindustrie eingesetzt.

Des Weiteren werden Siliconmembranen zur Gas-Separation (GS) eingesetzt. Typische Gas-Separationsprozesse sind die Abtrennung von Stickstoff aus der Luft, die Wasserstoffrückgewinnung, die Lufttrocknung, Verfahren zur Auftrennung von Kohlenwasserstoffen und die Entfernung von flüchtigen organischen Komponenten. Im Vergleich zu anderen Polymeren, die in Gas-Separationsprozessen eingesetzt werden, besitzen Siliconmembranen in allgemeinen eine deutlich höhere Permeabilität, haben jedoch zumeist eine geringere Selektivität. Verschiedenen Anwendungen im Bereich der Gas-Separation sind detailliert in der folgender Literaturstelle beschrieben: Ind. Eng. Chem. Res., Vol. 41, No. 6, 2002.

Ein Beispiel für eine lösemittelbasierte Nanofiltration, für die sich Siliconmembranen eignen, ist die Hexan-Rückgewinnung bei der Herstellung von Pflanzenölen. Durch die Verwendung von Membranen bei der Rückgewinnung von Hexan lassen sich bedeutende Mengen an Energie einsparen.

Der erste Schritt bei der Ölherstellung ist die Ölextraktion. Bei der Extraktion werden die ölhaltigen Rohstoffe mit Hexan versetzt. Man erhält eine Lösung des Öls in Hexan, die auch Miscella genannt wird. Das gelöste Öl enthält zu über 95 % Triacylglyceride und als Nebenbestandteile Phospholipide, freie Fettsäuren (FFA), Pigmente, Sterole, Kohlenhydrate, Proteine und deren Abbauprodukte.

Die Miscella besteht zu 70 bis 75 % aus Hexan. Die Trennung von Öl und Hexan kann zum Beispiel durch eine mehrstufige destillative Trennung erfolgen. Diese erfordert einen vergleichsweise hohen Energieaufwand für die Verdampfung des Hexans. Wird dagegen eine Membran zur Abtrennung von zumindest einem Großteil des Hexans eingesetzt, so lässt sich eine erhebliche Energiemenge einsparen.

Ein Problem, das beim Einsatz von Siliconmembranen auftreten kann, ist eine unzureichende Langzeitstabilität in Hexan-haltigen Systemen sowie die unerwünschte Anlagerung von Stoffen an der Membranoberfläche.

Die Verwendung von Silicon-Komposit-Membranen, oder auch als Composite-Silicon-Membranes bezeichnet, in der Pflanzenöl-Industrie ist wohlbekannt. Forschung, die auf diesem Gebiet stattgefunden hat, ist zum Beispiel in der folgenden Literaturstelle beschrieben: Fett. Lipid 98(1996), pp. 10-14, JAOCS 79(2002) pp. 937-942. Der Zusammenhang zwischen der Öberflächenhydrophobie und der Anlagerung von Komponenten an der Membranoberfläche in Sojaöl-Miscella-Lösungen wurde in der folgenden Literaturstellen beschrieben: in Colloids and Surfaces, A: Physicochemical and Engineering Aspects 204(2002)31-41.

Ein weiteres Beispiel für lösemittelbasierte Nanofiltrationsanwendungen für die sich Siliconmembranen prinzipiell eignen ist die Abtrennung von Homogenkatalysatoren z.B. aus Hydroformylierungs-Reaktionsmischungen: Elements, Degussa-ScienceNewsletter, 18, (2007) 30-35, EP-A1-1 931 472 ; aus Reaktionsmischungen der Metathese: Recovery of Enlarged Olefin Metathesis Catalysts by Nanofiltration in an Eco-Friendly Solvent, A. Keraani, T. Renouard, C. Fischmeister, C. Bruneau, M. Rabiller-Baudry, ChemSusChem 2008, 1, 927, EP 1817097; aus Suzuki-Kupplungsreaktionsmischungen: Solvent-Resistant Nanofiltration of Enlarged (NHC)Pd(allyl)CI Complexes for Cross-Coupling Reactions, Dirk Schoeps, Volodymyr Sashuk, Katrin Ebert, Herbert Plenio, Organometallics 2009, 28, 3922 oder aus Telomersierungsreaktionsmischen US2009 0032465A1.
Einen weitergehende Überblick über verschiedene lösemittelbasierende Nanofiltrations-Prozesse (Organic Solvent Nanofiltration, OSN) gibt die Literaturstelle: Chem. Soc. Rev., 2008, 37, 365-405. Hier wird auch beschrieben, dass die Siliconmembranen nach dem Stand der Technik bestenfalls 90 % der Triglyceride aus einer Hexanlösung an der Membran zurückgehalten haben. Die dort beschriebenen Triglyceride zeichnen sich durch Molmassen von 900 g/mol (+/- 10%) aus.

Ein Hersteller von am Markt verfügbaren Siliconmembranen ist die GMT Membrantechnik GmbH (Deutschland). Die Silicontrennschicht ihrer Membranen wird zum Beispiel mit dem in der Patentschrift DE 19507584 beschriebenen Verfahren hergestellt. Dabei werden die Siliconbeschichtungen durch Bestrahlung zusätzlich vernetzt. Dadurch soll das Anschwellen der Trennschicht in lösemittelhaltigen Systemen reduziert werden. Nichtsdestotrotz schwellen die Membranen in hydrophoben Medien, wie zum Beispiel niedermolekularen n-Alkanen, deutlich an und verlieren deutlich an Performance und Rückhalt. Die Membranen sind zudem sehr hydrophob, was dazu führt, das es z.B. in einer Miscella oder bei der Konzentrierung von Pharmawirkstoffen oder bei der Konzentrierung von Homogenkatalysatorsystemen oder bei der Konzentrierung von Farbstoffen zu einer deutlichen Anlagerung von hydrophoben Komponenten an der Membranoberfläche kommt.

In den Patentanmeldungen US 2007 0007195, EP 1 741 481 und EP 0 979 851 werden Membranen beschrieben, bei denen eine trennaktive Schicht durch die Aushärtung von Siliconacrylaten hergestellt wird. Dabei werden Siliconacrylate eingesetzt, die ausschließlich an den Kettenenden modifiziert sind. Dort sind auch Hinweise zu Herstellmethoden angegeben, wobei allen Methoden gemeinsam ist, dass auch ein Lösemittel eingesetzt wird, was bei der Herstellung abgedampft werden muss. Dies ist nachteilig, da die Lösungsmitteldämpfe entsorgt werden müssen.
Es zeigt sich außerdem, dass derartige Membranen keine gegenüber DE19507584 oder sonstigen Membranen nach dem Stand der Technik verbesserte Selektivität besitzen. Von einer ausreichenden Selektivität für technische Trennaufgaben liegt in der Regel erst dann vor, wenn deutlich mehr als 95% der zurückzuhaltenden Komponente an der Membran zurückgehalten werden. Alle bisher bekannten silicon- bzw. siliconacrylat-basierten Membranen weisen keinen derartigen, ausreichenden Rückhalt für die genannten Anwendungen auf.

Vor diesem Hintergrund bestand die Aufgaben der Erfindung darin Membranen auf Basis von Siliconen bereitzustellen, die mindestens 95% von Komponenten mit einer Molekülmasse kleiner als 800 g/mol aus einem organischen Lösungsmittel mit einer molaren Masse < 200 g/mol bevorzugt < 150 g/mol besonders bevorzugt < 120 g/mol abtrennen können. Beispiel für solche Lösungsmittel sind Tetrahydrofuran, Hexan, Heptan, Isopropanol, Toluol, Dichlormethan, Aceton und Essigsäureethylester.

Weiterhin bestand die Aufgabe darin die hohe Neigung zur Quellung der bisher bekannten Siliconmembranen insbesondere z.B. in aliphatischen Lösungsmitteln, wie z. Hexan und Heptan durch eine geeignete Vernetzung zu reduzieren.

Die erfolgreiche Reduktion der Quellung in den vorgenannten Lösungsmitteln zeigt sich in dem Erhalt der Trenneigenschaften über die Zeit. Membranen nach dem Stand der Technik zeigen z.B. bei dem Wechsel vom Lösungsmittel Toluol in das stark quellende Lösungsmittel Hexan einen Verdoppelung der molekularen Ausschlussgrenze (90%iger Rückhalt eines Polystyrols des entsprechenden Molekulargewichtes, MWCO) unter ansonsten gleichen Bedingungen. Dies gilt ausdrücklich auch für Membranen, die nach EP 1741 481 hergestellt sind, obwohl hier behauptet wird, dass eine reduzierte Quellungsneigung geschaffen worden sei. Die in der EP 1 741 481 offenbarten Beispiele zeigen, dass sich das Rückhaltevermögen verändert, was belegt, dass sehr wohl eine Quellung erfolgt. Eine kurzzeitige Betrachtung reicht hier für die behauptete Wirkung = Nicht-Quellung nicht aus.

Weiterhin bestand die Aufgabe darin, die sehr hydrophoben Eigenschaften der bisher bekannten Siliconmembranen über den Einbau von hydrophilen Bestandteilen in das Membranpolymer zu Gunsten der Hydrophilie zu vermindern.

Überraschenderweise wurde gefunden, dass Silicon-Kompositmembranen, die ein oder mehrere trennaktive Membranschichten aufweisen, besonders vorteilhafte Eigenschaften im Sinne der Aufgabenstellungen besitzen.

Gelöst wird die Aufgabe der Erfindung daher durch Silicon-Kompositmembranen, die ein oder mehrere trennaktive Membranschichten aufweisen wenn zumindest eine trennaktive Membranschicht durch die Aushärtung von seitenständig modifizierten Siliconacrylaten der allgemeinen Formel I hergestellt wurde. 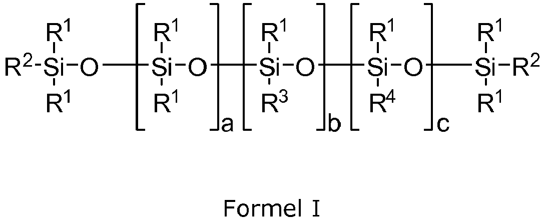 wobei gilt:
a = 25 - 500, bevorzugt 25 - 300, insbesondere 30 - 200,
b = 1 - 25, bevorzugt 1 - 15, insbesondere 1 - 8,
c = 0 - 20, bevorzugt 0 - 10, insbesondere 0,
R¹ = unabhängig voneinander gleiche oder verschiedene Alkyl- oder Arylreste mit 1 bis 30 C-Atomen die gegebenenfalls Ether- und/oder Ester- und/oder Epoxy- und/oder Alkohol-Funktionen tragen, bevorzugt gleiche oder verschiedene Alkyl- oder Arylreste mit 1 bis 30 C-Atomen, insbesondere Methyl oder Phenyl,
R² = unabhängig voneinander gleiche oder verschiedene Reste aus der Gruppe: R¹, R³ und R⁴,
R³ = gleiche oder verschiedene organische Reste die ein oder mehrere Acrylatgruppen tragen, bevorzugt Substituenten der allgemeinen Formel II oder III, 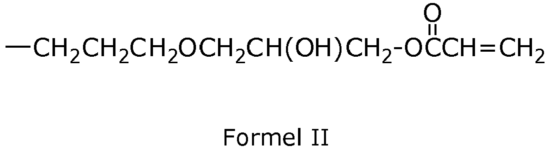 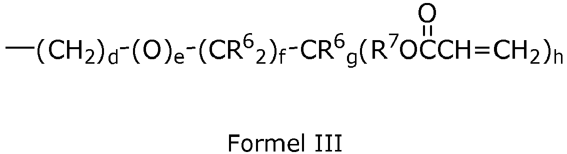
d = 0 bis 12, e = 0 oder 1, f = 0 - 12, g = 0 - 2, h = 1 - 3,
wobei gilt: g + h = 3,
R⁶ = unabhängig voneinander gleiche oder verschiedene Alkyl- oder Arylreste mit 1 bis 30 C-Atomen oder H,
R⁷ = gleiche oder verschiedene zweibindige Kohlenwasserstoffreste, bevorzugt -CR⁶₂-, insbesondere -CH₂-
R⁴ - gleiche oder verschiedene Polyether-Reste, bevorzugt gleiche oder verschiedene Polyetherreste der allgemeinen Formel IV

   -(CH₂)i-O-(CH₂CH₂O)ⱼ-(CH₂CH(CH₃)O)ₖ-(CH₂CHR⁸O)_{L}-R⁹ Formel IV
i = 0 - 12, bevorzugt 3 - 7, insbesondere 3,
j = 0 - 50, k = 0 - 50, l = 0 - 50,
R⁸ = gleiche oder verschiedene Alkyl oder Arylreste mit 2 - 30 Kohlenstoffatomen, bevorzugt Ethyl und Phenyl,
R⁹ = gleiche oder verschiedene Alkyl- oder Arylreste mit 2 - 30 Kohlenstoffatomen oder H oder Alkanoyl-reste, bevorzugt Methyl, H oder Acetyl.

Ein weiterer Gegenstand der Erfindung sind auch Kompositmembranen hergestellt durch die Härtung von Siliconacrylaten der Formel I, die aus mehreren Schichten von verschiedenen Siliconacrylaten aufgebaut sind.

Weiterhin hat sich gezeigt, dass sich eine besonders vorteilhafte Familie von Siliconmembranen herstellen lassen, wenn diese durch die Aushärtung einer Mischung verschiedener Siliconacrylate erfolgt. Durch die Wahl der Mischung lassen sich die Eigenschaften Trenngrenze, Vernetzungsgrad und Hydrophile nahezu stufenlos in bisher nicht bekannten Bereichen einstellen.

Daher sind weitere Gegenstände dieser Erfindungen Silicon-Kompositmembranen, die ein oder mehrere trennaktive Membranschichten aufweisen, welche durch die Aushärtung einer Mischung verschiedener Siliconacrylate hergestellt wurden.
Besonders vorteilhaft besteht die Mischung der verschiedenen Siliconacrylate aus zumindest folgenden Komponenten:
a) ein oder mehrere Siliconacrylate mit einem Siliziumgehalt von durchschnittlich > 29 Gew.-%, bevorzugt ein oder mehrere Siliconacrylate mit einem Siliziumgehalt von durchschnittlich > 29 Gew.-% der allgemeinen Formel I, insbesondere ein oder mehrere Siliconacrylate mit einem Siliziumgehalt von > 29 Gew.-% der allgemeinen Formel I mit b = c = 0, 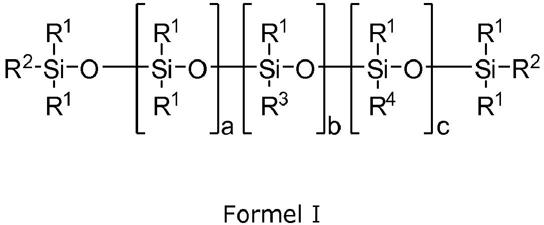 wobei für die Komponente a gilt:
   a = 25 - 500, bevorzugt 25 - 300, insbesondere 30 - 200,
   b = 0 - 15, bevorzugt 0 - 8, insbesondere 0
   c = 0 - 20, bevorzugt 0 - 10, insbesondere 0
   mit der Maßgabe, dass bei b = 0 R² = R³ ist,
b) ein oder mehrere Siliconacrylate mit einem Siliziumgehalt von < 27,5 Gew.-%, bevorzugt ein oder mehrere Siliconacrylate mit einem Siliziumgehalt von < 27,5 Gew.-% der allgemeinen Formel I, insbesondere ein oder mehrere Siliconacrylate mit einem Siliziumgehalt von < 27,5 Gew.-% der allgemeinen Formel I mit c >3,
wobei für die Komponente b gilt:
a = 1 - 24, bevorzugt 5 - 20, besonders bevorzugt 10 - 20 und insbesondere 10, 11, 12, 13, 14, 15, 16 oder 17, insbesondere
b = 0 - 25, bevorzugt 3 - 10, besonders bevorzugt 3, 4, 5, 6, 7 oder 8,
c = 0 - 20, bevorzugt 0 - 10, besonders bevorzugt 0 oder 1, 2, 3 oder 4 ,
mit der Maßgabe, dass bei b = 0 R² = R³ ist.

Bevorzugt werden liegen die Komponenten a) und b) in der Mischungen in einem Massenverhältnis von 10 zu 1 bis 1 zu 10 vor, insbesondere im Verhältnis 2 zu 8 bis 8 zu 2.

Bei den angegeben Strukturformeln handelt es sich um Polymere mit einer Molgewichtsverteilung. Die Indizes a, b, c, j, k und l stellen daher Mittelwerte dar und sind gegebenenfalls nicht ganzzahlig.

Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Der Siliziumgehalt der Siliconacrylate wird durch den Grad der organischen Modifikation beeinflusst. Je mehr organische Liganden an das Siloxangerüst gebunden sind, desto niedriger ist der Siliziumgehalt. Es hat sich gezeigt, dass Silicon-Composite-Membranen mit vorteilhaften Eigenschaften erhalten werden, wenn diese eine trennaktive Schicht besitzen, die durch die Aushärtung von einer Mischung verschiedenartiger Siliconacrylate hergestellt wird. Dabei werden ein oder mehrere verhältnismäßig hoch modifizierte Siliconacrylate mit einem Si-Gehalt von unter 27,5 Gew.-% (Komponente b) mit ein oder mehreren verhältnismäßig niedrig modifizierten Siliconacrylaten mit einem Si-Gehalt von > 29 Gew.-% (Komponente a) als Mischung ausgehärtet.

Die Eigenschaften der Membranen, die mit einer erfindungsgemäßen Mischung an Siliconacrylaten erhalten wird, weist vorteilhafte Eigenschaften auf, wie im folgendem gezeigt wird.

Besonders vorteilhafte Eigenschaften ergeben sich, wenn als Komponente a) Siliconacrylate eingesetzt werden, die lediglich an den Kettenenden modifiziert sind, sogenannte α,ω-modifizierte Siliconacrylate. Weiterhin zeigen sich vorteilhafte Eigenschaften, wenn als Komponente b) seitenständig modifizierte Siliconacrylate eingesetzt werden.

Neben den Siliconacrylaten kann es sinnvoll sein eine Reihe weiterer Stoffe, wie beispielsweise Füllstoffe, Stabilisatoren, Farben oder organische Acrylate der Mischung zuzusetzen. Diese Aufzählung ist nicht beschränkend aufzufassen.

Die vorliegende Erfindung beschreibt neuartige Komposit-Membranen, welche mindestens eine trennaktive Schicht besitzen, die durch spezielle Siliconacrylate oder eine Mischung von Siliconacrylaten hergestellt werden.
Zur Herstellung der erfindungsgemäßen Kompositmembranen eignen sich als Unterstruktur generell lösungsmittelbeständige poröse dreidimensionale Strukturen die als Trägermaterial dienen können wie z.B. Gewebevliese oder Mikro- oder Ultrafiltrationsmembranen oder Separatoren wie z.B. Batterieseparatoren wie Separion® (Warenzeichen der Evonik Degussa GmbH) oder Solupor®.

Grundsätzlich eignen sich alle für Filtrationen und/oder Phasenabtrennungen vorgesehenen Strukturen, die durch die speziellen erfindungsgemäßen Siliconacrylate zu Komposite-Membranen modifiziert werden können.

Ein weiterer Gegenstand der Erfindung sind auch Kompositmembranen die durch Aushärtung der erfindungsgegenständlichen Siliconacrylate der Formel I mit einem Photoinitiator durch elektromagnetische Strahlung mit einer Wellenlänge, die kleiner als 800 nm ist, und/oder durch Elektronenstrahlen erhalten werden. Insbesondere erfolgt die Aushärtung durch UV-Strahlung bei Wellenlängen unterhalb von 400 nm.
Ein weiterer Gegenstand der Erfindung sind auch die Kompositmembranen enthaltend die gehärteten Siliconacrylate nach Formel I, die als Trägermembranen eine Ultrafiltrationsmembran aufweisen.

Insbesondere der Einsatz von Mischungen verschiedener Siliconacrylate erlaubt es die Eigenschaften der Membran gezielt einzustellen. Durch die Einstellung eines bestimmten Mischungsverhältnisses ist es möglich die Membran für bestimmte Anforderungen anzupassen und spezielle Trennprobleme zu adressieren.

Die Evonik Goldschmidt GmbH bietet eine Reihe von kommerziell verfügbaren Siliconacrylaten an, die sich zur Herstellung von erfindungsgemäßen Membranen eignen.

Typische Produkte der Evonik Goldschmidt GmbH sind TEGO^{®} RC 902, TEGO^{®} RC 715. TEGO^{®} RC 902 und TEGO^{®} RC 715 sind lineare Polymere, die lediglich an den Kettenenden modifiziert sind. TEGO^{®} RC 902 hat einen Siliziumanteil von beispielsweise 34 Gew.-% und TEGO^{®} RC 715 einen Siliziumanteil von beispielsweise 32 Gew.-%, es handelt sich um vergleichsweise niedrig modifizierte Produkte. Auch seitenständig modifizierte Siloxane sind verfügbar, die einen Siliziumanteil von beispielsweise 24 Gew.-% aufweisen. Der Anteil an organischen Bestandteilen/Gruppen ist verhältnismäßig hoch im Vergleich zum Siliciumoxidgerüst. TEGO^{®} RC 902 und TEGO^{®} RC 715 entsprechen beispielsweise den linearen, kettenendenmodifizierten Polymeren der Komponente a) wenn Mischungen verschiedener Siliconacrylate eingesetzt werden, wohingegen seitenständig modifizierte Polymere der Komponente b) entsprechen.

Die oben beschriebenen Silicon-Kompositmembranen werden durch Beschichtung von porösen Trägermaterialien z.B. auf der Basis von Mikro- oder Ultrafiltrationsmembranen oder Separatoren hergestellt. Als Material für solcher Trägerschichten können dabei prinzipiell alle bekannten macroporösen Materialien eingesetzt werden: K.-V. Peinemann und S. Nunes, Membrane Technology in the Chemical Industry, Wiley-VCH Verlag GmbH, 2006. Besonders geeignet sind als poröses Trägermaterial Membranen ausgewählt aus der Gruppe der folgenden Materialien: Polyacrylnitril (PAN), Polyimid (PI), Polyetheretherketon (PEEK), Polyvinylidenfluorid (PVDF), Polyamid (PA), Polyamidimid (PAI), Polyethersulfon (PES), Polybenzimidazol (PBI),sulfoniertes Polyetherketon (SPEEK) Polyethylen (PE), Polypropylen (PP) sowie anorganische poröse Materialien und/oder keramische Membranen oder polymerkeramische Membranen hergestellt unter Verwendung von Aluminiumoxid, Titandioxid, Zirkondioxid, Siliziumoxid und/oder Titannitrit, sowie von Mischungen, Modifikationen oder Kompositen der vorbenannten verschiedenen Trägermembranmaterialien.

Die oben beschriebenen Silicon-Kompositmembranen eignen sich für Trennaufgaben in organischen Lösungsmitteln. Sie sind je nach Ausführung in der Lage gelöste Moleküle mit einem Molekulargewicht von kleiner als 2000 g/mol, bevorzugt Moleküle mit einem Molekulargewicht von kleiner als 1000 g/mol und besonders bevorzugt Moleküle mit einem Molekulargewicht von kleiner als 500 g/mol in einer Rückhaltequote von mindestens 90 Gew.-%, bevorzugt >95 Gew.-%, besonders bevorzugt >98 Gew.-% und insbesondere > 99 Gew.-% abzutrennen oder zurückzuhalten.

In einer besonders bevorzugten Ausführungsform der Erfindung lassen sich durch die erfindungsgegenständlichen Membranen aus in einem organischen Lösungsmittel gelösten Komponenten unterschiedlicher Molekularmassen mindestens 95% von Komponenten mit einer Molekülmasse kleiner als 800 g/mol, bevorzugt mit einer molaren Masse < 200 g/mol, besonders bevorzugt < 150 g/mol und insbesondere < 120 g/mol abtrennen. Beispiel für solche abtrennbaren Lösungsmittel sind Tetrahydrofuran, Hexan, Heptan, Isopropanol, Toluol, Dichlormethan, Aceton und Essigsäureethylester, bevorzugt Hexan oder Heptan.

Bei den gelösten Molekülen kann es sich prinzipiell um alle im jeweiligen Lösungsmittel lösliche Moleküle handeln. Ein weiterer Gegenstand der Erfindung ist daher die Verwendung der erfindungsgegenständlichen Silicon-Kompositmembranen z.B. zur Abtrennung von Homogenkatalysatorsystemen aus Reaktionsmischungen, zur Trennung von Triglyceriden aus Lösungsmitteln wie beispielsweise Hexan, Heptan, Ethanol oder Aceton, zur Abtrennung von Oligomeren aus Monomerlösungen oder zur Abtrennung von (Pharma-) Wirkstoffen oder deren Vorprodukten aus Reaktionsgemischen oder Lösungen.

Ein weiterer Gegenstand der Erfindung ist somit auch die Verwendung der Siliconpolyacrylate-Kompositmembranen zur Abtrennung von Homogenkatalysatorsystemen aus Reaktionsmischungen, zur Trennung von Triglyceriden aus Lösungsmitteln mit einem Molekulargewicht von weniger als 200 g/mol, zur Abtrennung von Oligomeren aus Monomerlösungen oder zur Abtrennung von (Pharma-) Wirkstoffen oder deren Vorprodukten aus Reaktionsgemischen oder Lösungen.
Bevorzugt werden bei diesen Verfahren als Lösungsmittel Kohlenwasserstoffe mit 1-8 Kohlenstoffatomen, bevorzugt Hexan oder Heptan, deren Isomere oder auch deren Mischungen oder auch CO₂ verwendet.

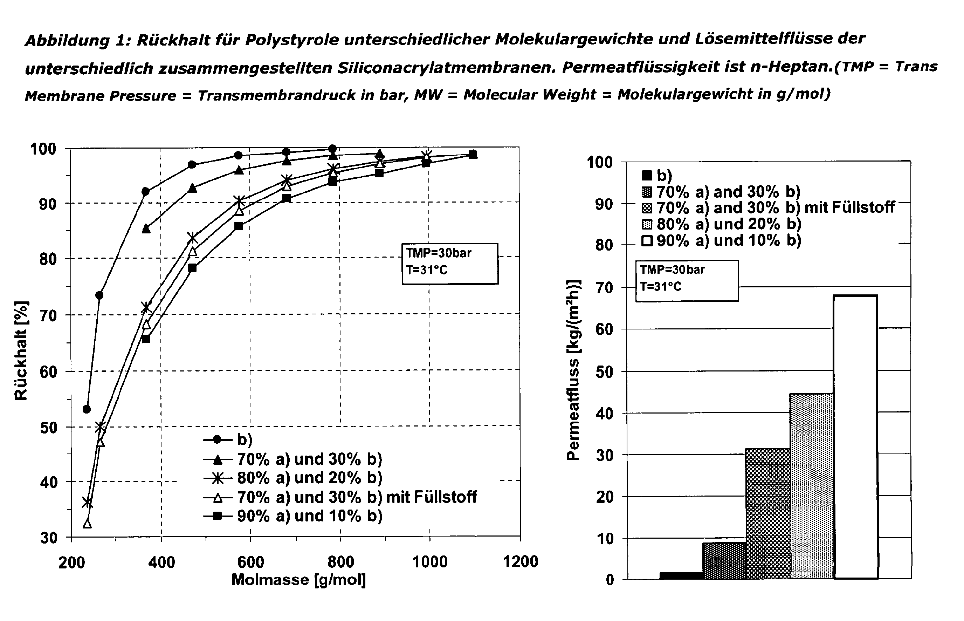

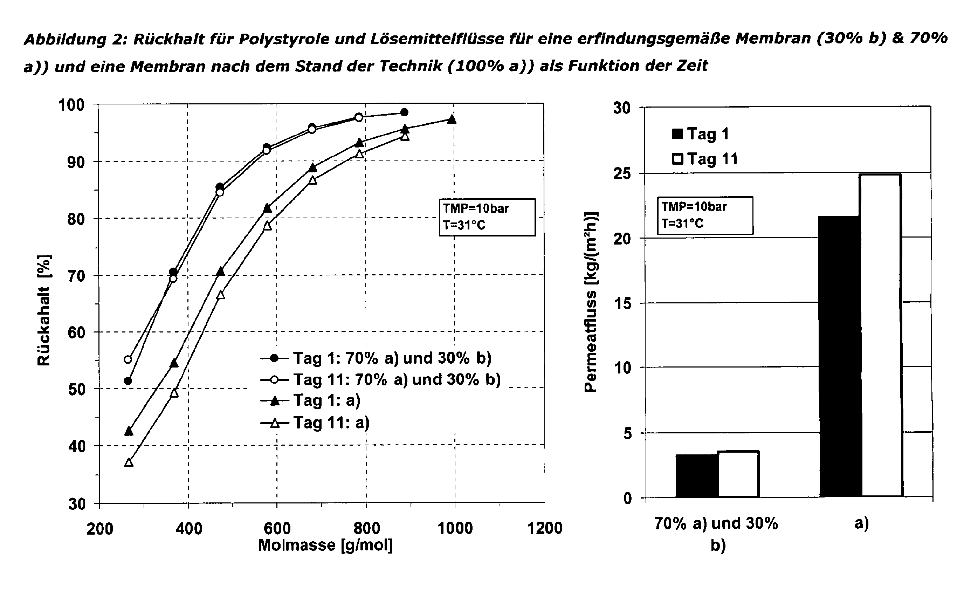

Zur Aufreinigung von Substanzen eignen sich die erfindungsgemäßen Komposit-Membranen insbesondere, da beispielsweise bei festgelegten Trennparamentern wie Temperatur, Druck und Lösungsmittel sich gezielt Molkulargewichtsfraktionen unterhalb festgelegter Bereiche aus Lösungen abtrennen lassen. Bei typischen Systembedingungen wie z.B. 30°C, 30 bar Druck (TMP - Trans Membrane Pressure) können so Molekulargewichtsfraktionen von kleiner 1000 g/mol, bevorzugt kleiner 600 g/mol und insbesondere kleiner 300 g/mol aus Lösungen in n-Heptan abgetrennt werden.
Ausgehend von einer Mischung von seitenständig modifizierten und endständig α,ω-modifizierte Siliconacrylaten lässt sich die Membrantrennleistung (in weiten Grenzen) für die unterschiedlichen Lösungsmittelsysteme gezielt einstellen (siehe dazu auch Abbildung 1 oder Abbildung 2).

Ein weiterer Gegenstand der Erfindung ist ein Verfahren zur Herstellung einer Kompositmembran wobei eine Trägermembran mit zumindest einem Siliconacrylat der Formel I und Mischungen verschiedener Siliconacrylate beschichtet und anschließend durch elektromagnetische Strahlung und/oder Elektronenstrahlung ausgehärtet wird bei Raumtemperatur.
Das Siliconacrylat oder ggf. die Siliconacrylatmischung wird ggf. unter Mitverwendung eines Lösungsmittels auf ein Walzensystem gegeben, wie es herkömmlich z.B. für die Beschichtung von Antihaftbeschichtungen von Trägermaterialen für z.B. Etiketten Anwendung findet, besonders vorteilhaft wird dazu kein weiteres Lösungsmittel verwendet. Dem Siliconacrylat wurde zuvor ein Photoinitiator zugegeben. Durch das Walzensystem wird das Siliconacrylat in Schichtdicken zwischen 0,3 - 2 Mikrometer auf das Membranmaterial aufgetragen und mittels UV-Strahlung oder Elektronenstrahlung radikalisch ausgehärtet. Weitere thermische Energie wird nicht benötigt. Das Siliconacrylat ist sofort nach Durchlaufen der Reaktionskammer ausgehärtet. In der Reaktionskammer werden freie Radikalstellen durch Sauerstoff gequenscht, weshalb es unumgänglich ist die Reaktionskammer mit Stickstoff zu inertisieren.

### Beispiele

In den nachfolgend aufgeführten Beispielen wird die vorliegende Erfindung zur Verdeutlichung der Erfindung beschrieben, ohne dass die Erfindung, deren Anwendungsbreite sich aus der gesamten Beschreibung und den Ansprüchen ergibt, auf die in den Beispielen genannten Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z.B. organomodifizierte Siliconacrylate beschrieben, die verschiedene Monomereinheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als statistische Mittelwerte, gemittelt über alle entsprechenden Verbindungen, zu verstehen.

### Herstellung der Membranen

Auf der Basis von am Markt verfügbaren Ultrafiltrationsmembranen aus Polyacrylnitril, zu beziehen z.B. von der Fa. GMT, Rheinfelden oder GE-Osmonics, Vista, USA vertrieben von der Firma Desalogics, Ratzeburg wurden Beschichtungen mit TEGO Siliconacrylaten der Evonik Goldschmidt GmbH durchgeführt. Die Beschichtungen wurden mit einem Glattwalzen-Auftragswerken mit 5 Walzen schichtweise durchgeführt. Die Beschichtungen erfolgten mit einem Auftragsgewicht von 0,6 bis 1,5 g/m². Die Beschichtungen wurden in einer inerten Stickstoffatmosphere über eine UV-Lampe vernetzt. Hierzu wird den Siliconacrylaten ein geeigneter Photoinitiator, wie z.B. ein Hydroxylketon in einer Menge von 1/100 bezogen auf die Siliconmasse zugegeben. Auf diese Art wurden auf der Basis der genannten Ultrafiltrationsmembran Composite-Membranen erzeugt, die unterschiedliche Mischungen und Schichtfolgen der Siliconarylate entsprechend Komponente a) und Komponente b) aufwiesen. Hergestellt wurden folgende Beschichtungen, mit unterschiedlichen Massenanteilen der Komponente a) und Komponente b) jeweils bezogen auf die Gesamt-Siliconacrylatmenge:
- 90 Gew.-% a) & 10 Gew.-% b);
- 80 Gew.-% a) & 20 Gew.-% b), mit zusätzlichen 3 Gew.-% anorganischem Füllstoff bezogen auf die Gesamt-Siliconacrylatmenge;
- 70 Gew.-% a) & 30 Gew.-% b) mit zusätzlich 3 Gew.-% anorganische Füllstoffe bezogen auf die Gesamt-Siliconacrylatmenge und ohne anorganische Füllstoffe sowie
- 100 Gew.-% b).

Die in den Beispielen verwendeten Komponenten a) und b) sind gemäß Formel 1 wie folgt aufgebaut:
- Komponente a): a = 83, b = 0, c = 0, R¹ = CH₃,
R² = (CH₂)₃-O-CH₂-C(C₂H₅)(CH₂O-C(O)-CH=CH₂)₂
Si-Gehalt = 34,2%
- Komponente b): a = 13, b = 5, c = 0, R¹ = R² = CH₃
R³ = Substituent gemäß Formel II
Si-Gehalt = 23,8%

Die Komponenten werden mit Methoden gemäß dem Stand der Technik hergestellt, wie beispielsweise in der DE 3920294 C1 beschrieben ist.

Als anorganischer Füllstoff wurde Kieselsäure eingesetzt.

Als Vergleichsmuster einer Membran nach dem Stand der Technik wurde eine Membran die ausschließlich auf der Basis des TEGO^{®} RC 902 entsprechend der Komponente a) hergestellt wurde, untersucht.

Die hergestellten Membranen wurden durch die sogenannte MWCO (Molecular Weight Cut-Off)-Methode in n-Heptan charakterisiert. Die MWCO-Methode ist zum Beispiel in der folgenden Literatur beschrieben: Journal of Membrane Science 291(2007)120-125. Die Methode basiert auf der Messung der Zurückhaltung verschiedener Styrol-Oligomere in Abhängigkeit deren Molgewichtes (MWCO-Kurve).

Mit Hilfe der MWCO-Methode läßt sich abschätzen, in wie weit sich ein gelöster Stoff mit einem bestimmten Molgewicht abgetrennen lässt. In Abbildung 1 und Abbildung 2 sind die molare Masse (Mw) der gelösten Stoffe, hier Polystryrole gegen den Rückhalt an der jeweils untersuchten Membran in Gew. %, abgeleitet aus Massenkonzentrationen, aufgetragen.

Die Stabilität der trennaktiven Schicht wurde bestimmt, indem die MWCO-Kurve und die Permeabilität der Membran über einen langen Zeitraum in n-Heptan bestimmt wurden.

Die Membranen wurden mittels einer Querstromfiltration getestet. Die Betriebstemperatur betrug 30 °C und der transmembrane Druck (TMP) 30 bar. Bei den Langzeitversuchen wurde ein Druck von 10 bar angewendet. Die Membranen wurden mit reinen Lösemitteln konditioniert bis ein stationärer Fluss erreicht wurde. Anschließend wurde das reine Lösemittel durch eine Mischung aus Lösemittel und Oligostyrol-Indikator ersetzt. Nachdem wiederum ein stationärer Fluss erreicht wurde, wurden Proben vom Permeat und vom Einspeisestrom entnommen und der Anteil an Styrololigomer in Analogie zur MWCO-Methode bestimmt.

Abbildung 1 und 2 zeigen die Ergebnisse des Rückhaltevermögens für Polystyrole mit unterschiedlichen Molekulargewichten, sowie die Lösemittelflüsse der unterschiedlich zusammengestellten Siliconacrylatmembranen. Permeatflüssigkeit ist n-Heptan.

Die Ergebnisse in Abbildung 1 belegen, dass sich die Eigenschaften der trennaktiven Membranschichten durch eine Mischung der verschiedenen TEGO RC-Produkte gezielt einstellen lassen, von einer Membran mit einer exzellenten Trennwirkung, jedoch einem niedrigem Fluss, bis zu einer Membran mit einem hohem Fluss, aber einer niedrigeren Trennwirkung. So lässt sich durch die Mischung der verschiedenen Siliconacrylate das Eigenschaftsprofil der Membran gezielt für eine Applikation einstellen.

Aus den MWCO-Kurven kann entnommen werden, dass die Membran mit dem höchsten Anteil der Komponenten a) von 90% den relativ niedrigsten Rückhalt aufweist und den höchsten Permeatfluss zeigt. Auf der anderen Seite zeigt eine Membran die zu 100% aus der Komponente b) besteht fast keinen Permeatfluss mehr für n-Heptan und einen sehr hohen Rückhalt. Die dargestellten Ergebnisse der Mischungen 20/80 und 30/70 mit und ohne Füllstoffe zeigen, dass die Eigenschaften fast stufenlos einstellbar sind.

Der Vergleichstest der erfindungsgemäßen Membranen mit einer Zusammensetzung 30% b) & 70% a) mit Siliconmembranen nach dem Stand der Technik (100% a)) wurden wie oben beschrieben in n-Heptan durchgeführt. Nach weiteren 11 Tagen Dauerbetrieb der Membrane bei 10 bar und 30°C in Hexan wurde der MWCO-Test erneut durchgeführt.

Die in Abbildung 2 dargestellten Ergebnisse zeigen, dass die erfindungsgemäße Membran eine deutlich zu kleineren Molekulargewichten verschobene Trenngrenze aufweist.

Aus der deutlichen Verschiebung der Trennkurve der Membran nach dem Stand der Technik zu höheren Molekulargewichten und der Steigerung des Permeatflusses folgt, dass diese in Heptan nicht stabil ist. Die erfindungsgemäße Membran zeigt keine relevante Änderung der Permeatflussleistung und der Trenneigenschaften als Funktion der Betriebszeit, was die Stabilität der Membran in n-Heptan belegt.

## Patentansprüche

1. Kompositmembran mit einer trennaktiven Membranschicht und einer Trägermembran die ein oder mehrere trennaktive Membranschichten aufweisen **dadurch gekennzeichnet, dass** zumindest eine trennaktive Membranschicht durch die Aushärtung von seitenständig modifizierten Siliconacrylaten der allgemeinen Formel I hergestellt wird 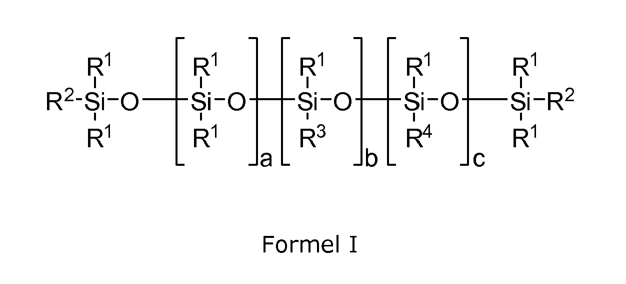 wobei gilt:
a = 25 - 500,
b = 1 - 25,
c = 0 - 20,
R¹ = unabhängig voneinander gleiche oder verschiedene Alkyl- oder Arylreste mit 1 bis 30 C-Atomen die gegebenenfalls Ether- und/oder Ester- und/oder Epoxy- und/oder Alkohol-Funktionen tragen,
R² = unabhängig voneinander gleiche oder verschiedene Reste aus der Gruppe: R¹, R³ und R⁴,
R³ = unabhängig voneinander gleiche oder verschiedene organische Reste die ein oder mehrere Acrylatgruppen tragen,
R⁴ = gleiche oder verschiedene Polyether-Reste.

2. Kompositmembran nach Anspruch 1, **dadurch gekennzeichnet, dass** als Substituent R³ bevorzugt Reste der allgemeinen Formel II oder III, 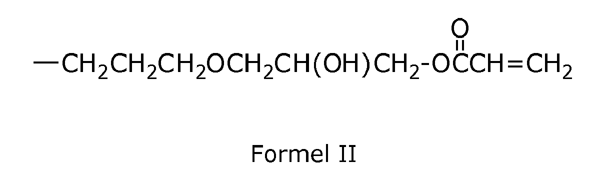 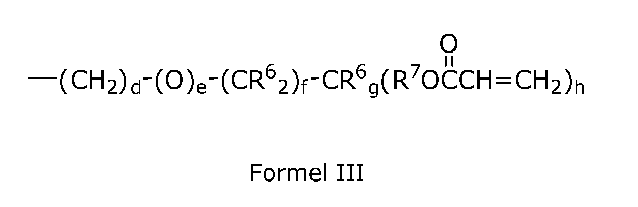
d = 0 bis 12, e = 0 oder 1, f = 0 - 12, g = 0 - 2, h = 1 - 3,
wobei gilt: g + h = 3,
R⁶ = unabhängig voneinander gleiche oder verschiedene Alkyl- oder Arylreste mit 1 bis 30 C-Atomen oder H,
R⁷ = gleiche oder verschiedene zweibindige Kohlenwasserstoffreste, bevorzugt -CR⁶₂-, insbesondere -CH₂-
verwendet werden.

3. Kompositmembran nach einem der Ansprüche 1 oder 2, **dadurch gekennzeichnet, dass** als Rest R⁴ in Formel I gleiche oder verschiedene Polyetherreste der allgemeinen Formel IV
-(CH₂)ᵢ-O-(CH₂CH₂O)ⱼ-(CH₂CH(CH₃)O)ₖ-(CH₂CHR⁸O)ₗ-R⁹ Formel IV
i = 0 - 12, bevorzugt 3 - 7, insbesondere 3,
j = 0 - 50, k = 0 - 50, l = 0 - 50,
R⁸ = gleiche oder verschiedene Alkyl oder Arylreste mit 2 - 30 Kohlenstoffatomen, bevorzugt Ethyl und Phenyl,
R⁹ = gleiche oder verschiedene Alkyl- oder Arylreste mit 2 - 30 Kohlenstoffatomen oder H oder Alkanoylreste, bevorzugt Methyl, H oder Acetyl,
verwendet werden.

4. Kompositmembran nach zumindest einem der Ansprüche 1 bis 3, **dadurch gekennzeichnet dass** diese durch mehrere Schichten von verschiedenen Siliconacrylaten aufgebaut ist.

5. Kompositmembran nach Anspruch 4, **dadurch gekennzeichnet, dass** diese durch Mischungen von verschiedenen Siliconacrylaten aufgebaut ist.

6. Kompositmembran nach Anspruch 5, **dadurch gekennzeichnet dass** zwei verschiedenen Siliconacrylate eingesetzt werden, wobei als Komponente a) endständig α,ω-modifizierte Siliconacrylate und als Komponente b) seitenständig modifizierte Siliconacrylate gemäß der Formel I verwendet werden.

7. Kompositmembran nach den Ansprüchen 4 oder 6, **dadurch gekennzeichnet dass** zumindest eine der folgenden Komponenten enthält:
a) ein oder mehrere Siliconacrylate mit einem Siliziumgehalt von durchschnittlich > 29 Gew.-% der allgemeinen Formel I 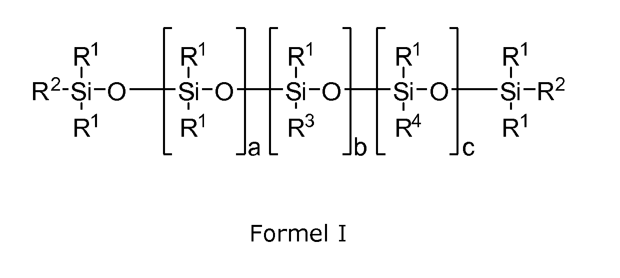 wobei für die Komponente a gilt:
a = 25 - 500,
b = 0 - 15,
c = 0 - 20,
mit der Maßgabe, dass bei b = 0 R² = R³ ist.
b) ein oder mehrere Siliconacrylate mit einem Siliziumgehalt von < 27,5 Gew.-% der allgemeinen Formel I
wobei für die Komponente b gilt:
a = 1 - 24,
b = 0 - 25,
c = 0 - 20,
mit der Maßgabe, dass bei b = 0 R² = R³ ist.

8. Komposit-Siliconmembranen nach Anspruch 7, **dadurch gekennzeichnet, dass** die Komponenten a) und b) in der Mischung in einem Massenverhältnis von 10 zu 1 bis 1 zu 10 vorliegen.

9. Kompositmembran nach einem der Ansprüche 1 bis 8, **dadurch gekennzeichnet dass** die Aushärtung der Siliconacrylate mit einem Photoinitiator durch elektromagnetische Strahlung mit einer Wellenlänge, die kleiner als 800 nm ist und/oder durch Elektronenstrahlen erhalten werden.

10. Kompositmembran nach einem der Ansprüchen 1 bis 9, **dadurch gekennzeichnet dass** die Trägermembran eine lösungsmittelbeständige poröse dreidimensionale Trägerstruktur ausgewählt aus der Gruppe der Gewebevliese oder Mikrofiltrationsmembranen oder Ultrafiltrationsmembranen oder Separatoren ist.

11. Kompositmembran nach einem der Ansprüchen 1 bis 10, **dadurch gekennzeichnet, dass** das poröses Trägermaterial aus der Gruppe der folgenden Materialien: Polyacrylnitril (PAN), Polyimid (PI), Polyetheretherketon (PEEK), Polyvinylidenfluorid (PVDF), Polyamid (PA), Polyamidimid (PAI), Polyethersulfon (PES), Polybenzimidazol (PBI),solfoniertes Polyetherketon (SPEEK) Polyethylen (PE), Polypropylen (PP) oder anorganische poröse Materialien und/oder keramische Membranen oder polymerkeramische Membranen hergestellt unter Verwendung von Aluminiumoxid, Titandioxid, Zirkondioxid, Siliziumoxid und/oder Titannitrit, sowie von Mischungen, Modifikationen oder Kompositen der vorbenannten verschiedenen Trägermembranmaterialien.

12. Verwendung der Kompositmembran nach einem der Ansprüche 1 bis 11 zur Zurückhaltung gelöster Moleküle mit einem Molekulargewicht von kleiner als 2000 g/mol mit eine Rückhaltequote von mindestens 90 Gew.-%.

13. Verwendung nach Anspruch 12 zur Abtrennung von Homogenkatalysatorsystemen aus Reaktionsmischungen, zur Trennung von Triglyceriden aus Lösungsmitteln mit einem Molekulargewicht von weniger als 200 g/mol, zur Abtrennung von Oligomeren aus Monomerlösungen oder zur Abtrennung von (Pharma-) Wirkstoffen oder deren Vorprodukten aus Reaktionsgemischen oder Lösungen.

14. Verwendung nach 13, **dadurch gekennzeichnet, dass** als Lösungsmittel Kohlenwasserstoffe mit 1-8 Kohlenstoffatomen, deren Isomere oder auch deren Mischungen oder auch CO₂ verwendet wird.

15. Verwendung nach zumindest einem der Ansprüche 12 bis 14, **dadurch gekennzeichnet, dass** bei 30°C, 30 bar Druck Molekulargewichtsfraktionen von kleiner 1000 g/mol aus Lösungen in n-Heptan abgetrennt werden.

16. Verfahren zur Herstellung einer Kompositmembran nach zumindest einem der Ansprüche 1 bis 11, **dadurch gekennzeichnet, dass** eine Trägermembran mit zumindest einem Siliconacrylat der Formel I und Mischungen verschiedener Siliconacrylate beschichtet und anschließend durch elektromagnetische Strahlung und/oder Elektronenstrahlung ausgehärtet wird.

## Claims

1. Composite membrane having a separating membrane layer and a support membrane which have one or more separating membrane layers, **characterized in that** at least one separating membrane layer is produced by curing laterally modified silicone acrylates of the general Formula I 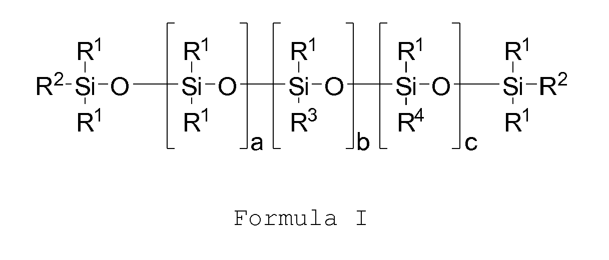 wherein:
a = 25-500,
b = 1-25,
c = 0-20,
R¹ = independent of one another identical or different alkyl or aryl radicals having 1 to 30 carbon atoms which optionally bear ether and/or ester and/or epoxy and/or alcohol functions,
R² = independent of one another identical or different radicals from the group: R¹, R³ and R⁴,
R³ = independent of one another identical or different organic radicals which bear one or more acrylate groups,
R⁴ = identical or different polyether radicals.

2. Composite membrane according to Claim 1, **characterized in that**, as substituent R³, use is preferably made of radicals of general Formula II or III, 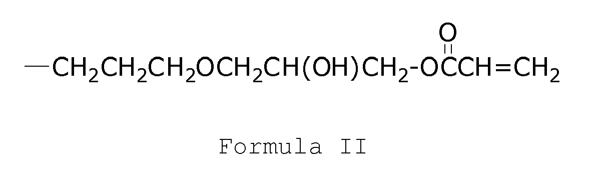 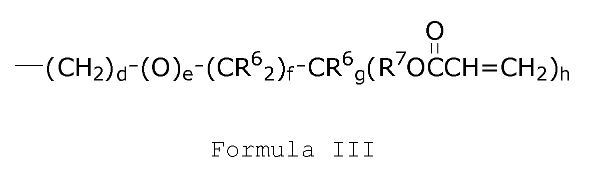
d = 0 to 12, e = 0 or 1, f = 0-12, g = 0-2, h = 1-3,
wherein: g + h = 3,
R⁶ = independent of one another identical or different alkyl or aryl radicals having 1 to 30 carbon atoms or H,
R⁷ = identical or different divalent hydrocarbon radicals, preferably -CR⁶₂-, in particular -CH₂-.

3. Composite membrane according to either of Claims 1 or 2, **characterized in that**, as radical R⁴ in Formula I, use is made of identical or different polyether radicals of the general Formula IV
-(CH₂)ⱼ-O-(CH₂CH₂O)ⱼ-(CH₂CH(CH₃)O)ₖ-(CH₂CHR⁸O)ₗ-R⁹ Formula IV
i = 0-12, preferably 3-7, in particular 3,
j = 0-50, k = 0-50, 1 = 0-50,
R⁸ = identical or different alkyl or aryl radicals having 2-30 carbon atoms, preferably ethyl and phenyl,
R⁹ = identical or different alkyl or aryl radicals having 2-30 carbon atoms, or H or alkanoyl radicals, preferably methyl, H or acetyl.

4. Composite membrane according to at least one of Claims 1 to 3, **characterized in that** this is composed of a plurality of layers of different silicone acrylates.

5. Composite membrane according to Claim 4, **characterized in that** this is composed of a mixture of different silicone acrylates.

6. Composite membrane according to Claim 5, **characterized in that** two different silicone acrylates are used, wherein as component a) terminally α,ω-modified silicone acrylates are used and as component b) laterally modified silicone acrylates according to the Formula I are used.

7. Composite membrane according to Claims 4 or 6, **characterized in that** it contains at least one of the following components:
a) one or more silicone acrylates having a silicon content of on average > 29% by weight of the general Formula I 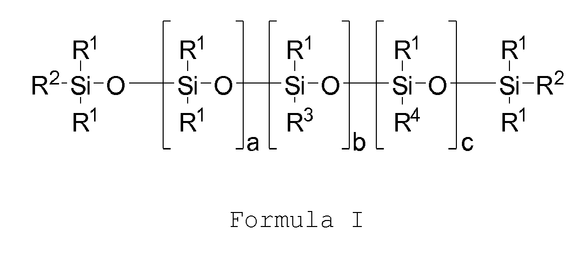 wherein, for the component a:
a = 25-500,
b = 0-15,
c = 0-20,
with the proviso that when b = 0, R² = R³,
b) one or more silicone acrylates having a silicon content of < 27.5% by weight of the general Formula I
wherein, for the component b:
a = 1-24,
b = 0-25,
c = 0-20,
with the proviso that when b = 0, R² = R³.

8. Composite silicone membranes according to Claim 7, **characterized in that** the components a) and b) are present in the mixture in a mass ratio of 10 to 1 to 1 to 10.

9. Composite membrane according to any one of Claims 1 to 8, **characterized in that** the silicone acrylates are cured using a photoinitiator by electromagnetic radiation having a wavelength which is less than 800 nm and/or by electron beams.

10. Composite membrane according to any one of Claims 1 to 9, **characterized in that** the support membrane is a solvent-stable porous three-dimensional support structure selected from the group of nonwovens or micro-filtration membranes or ultrafiltration membranes or separators.

11. Composite membrane according to any one of Claims 1 to 10, **characterized in that** the porous support material is selected from the group of the following materials: polyacrylonitrile (PAN), polyimide (PI), polyether ether ketone (PEEK), polyvinylidene fluoride (PVDF), polyamide (PA), polyamide-imide (PAI), polyethersulfone (PES), polybenzimidazole (PBI), sulphonated polyether ether ketone (SPEEK), polyethylene (PE), polypropylene (PP), or inorganic porous materials and/or ceramic membranes or polymer ceramic membranes produced using aluminium oxide, titanium dioxide, zirconium dioxide, silicon oxide and/or titanium nitrite, and also mixtures, modifications or composites of the named various support membrane materials.

12. Use of the composite membrane according to any one of Claims 1 to 11 for retaining dissolved molecules having a molecular weight of less than 2000 g/mol with a retain fraction rate of at least 90% by weight.

13. Use according to Claim 12 for retaining or separating off homogeneous catalyst systems from reaction mixtures, for separating triglycerides from solvents having a molecular weight of less than 200 g/mol, for separating off oligomers from monomer solutions, or for separating off (pharmaceutical) active ingredients or precursors thereof from reaction mixtures or solutions.

14. Use according to Claim 13 **characterized in that** hydrocarbons with 1 to 8 carbon atoms, its isomers or mixtures or else CO₂ are used as solvent.

15. Use according to any one of Claims 12 to 14, **characterized in that** molecular weight fractions of less than 1000 g/mol are separated off from solutions in n-heptane at 30°C, 30 bar pressure.

16. Process for producing a composite membrane according to at least one of Claims 1 to 11, **characterized in that** a support membrane is coated with at least one silicone acrylate of the Formula I and mixtures of various silicone acrylates, and is subsequently cured by electromagnetic radiation and/or electron beam radiation.

## Revendications

1. Membrane composite comprenant une couche de membrane à action de séparation et une membrane support qui comprend une ou plusieurs couches de membrane à action de séparation, **caractérisée en ce qu'**au moins une couche de membrane à action de séparation est fabriquée par le durcissement d'acrylates de silicone modifiés latéralement de formule générale I 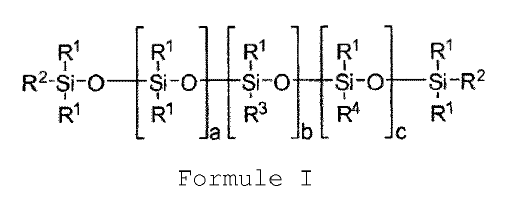 dans laquelle :
a = 25 à 500,
b = 1 à 25,
c = 0 à 20,
R¹ = indépendamment les uns des autres, radicaux alkyle ou aryle identiques ou différents de 1 à 30 atomes C, qui portent éventuellement des fonctions éther et/ou ester et/ou époxy et/ou alcool,
R² = indépendamment les uns des autres radicaux identiques ou différents du groupe : R¹, R³ et R⁴,
R³ = indépendamment les uns des autres radicaux organiques identiques ou différents qui portent un ou plusieurs groupes acrylate,
R⁴ = radicaux polyéther identiques ou différents.

2. Membrane composite selon la revendication 1, **caractérisée en ce que** des radicaux de formule générale II ou III sont utilisés de préférence en tant que substituant R³ 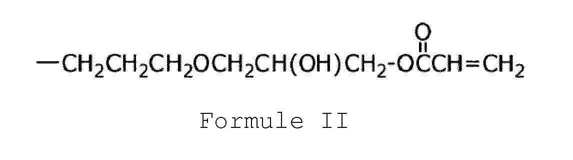 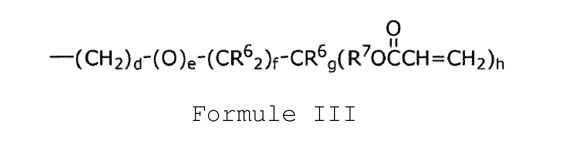
d = 0 à 12, e = 0 ou 1, f = 0 à 12, g = 0 à 2, h = 1 à 3,
avec : g + h = 3,
R⁶ = indépendamment les uns des autres radicaux alkyle ou aryle identiques ou différents de 1 à 30 atomes C ou H,
R⁷ = radicaux hydrocarbonés bivalents identiques ou différents, de préférence -CR⁶₂-, notamment -CH₂-.

3. Membrane composite selon l'une quelconque des revendications 1 ou 2, **caractérisée en ce que** des radicaux polyéther de formule générale IV sont utilisés en tant que radical R⁴ dans la formule I
-(CH₂)ᵢ-O-(CH₂CH₂C₃)ⱼ(CH₂CH(CH₃)O)ₖ-(CH₂CHR⁸O)ₗ-R⁹ Formule IV
i = 0 à 12, de préférence 3 à 7, notamment 3,
j = 0 à 50, k = 0 à 50, l = 0 à 50,
R⁸ = radicaux alkyle ou aryle identiques ou différents de 2 à 30 atomes de carbone, de préférence éthyle et phényle,
R⁹ = radicaux alkyle ou aryle identiques ou différents de 2 à 30 atomes de carbone ou H ou radicaux alcanoyle, de préférence méthyle, H ou acétyle.

4. Membrane composite selon au moins l'une quelconque des revendications 1 à 3, **caractérisée en ce que** celle-ci est formée par plusieurs couches d'acrylates de silicone différents.

5. Membrane composite selon la revendication 4, **caractérisée en ce que** celle-ci est formée par des mélanges d'acrylates de silicone différents.

6. Membrane composite selon la revendication 5, **caractérisée en ce que** deux acrylates de silicone différents sont utilisés, des acrylates de silicone α,ω-modifiés terminalement étant utilisés en tant que composant a) et des acrylates de silicone modifiés latéralement selon la formule I étant utilisés en tant que composant b).

7. Membrane composite selon la revendication 4 ou 6, **caractérisée en ce qu'**elle contient au moins un des composants suivants :
a) un ou plusieurs acrylates de silicone ayant une teneur en silicium en moyenne > 29 % en poids de formule générale I 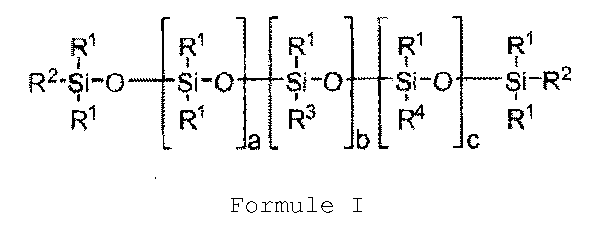 avec pour le composant a :
a = 25 à 500,
b = 0 à 15,
c = 0 à 20,
à condition que lorsque b = 0, R² = R³,
b) un ou plusieurs acrylates de silicone ayant une teneur en silicium < 27,5 % en poids de formule générale I
avec pour le composant b :
a = 10 à 24,
b = 0 à 25,
c = 0 à 20,
à condition que lorsque b = 0, R² = R³.

8. Membranes composites en silicone selon la revendication 7, **caractérisées en ce que** les composants a) et b) sont présents dans le mélange en un rapport en masse de 10 sur 1 à 1 sur 10.

9. Membrane composite selon l'une quelconque des revendications 1 à 8, **caractérisée en ce que** le durcissement des acrylates de silicone est obtenu avec un photoinitiateur par rayonnement électromagnétique à une longueur d'onde qui est inférieure à 800 nm et/ou par des faisceaux d'électrons.

10. Membrane composite selon l'une quelconque des revendications 1 à 9, **caractérisée en ce que** la membrane support est une structure support tridimensionnelle poreuse résistante aux solvants choisie dans le groupe constitué par les non-tissés ou les membranes de microfiltration ou les membranes d'ultrafiltration ou les séparateurs.

11. Membrane composite selon l'une quelconque des revendications 1 à 10, **caractérisée en ce que** le matériau support poreux est choisi dans le groupe des matériaux suivants : le polyacrylonitrile (PAN), le polyimide (PI), la polyétheréthercétone (PEEK), le polyfluorure de vinylidène (PVDF), le polyamide (PA), le polyamide-imide (PAI), la polyéthersulfone (PES), le polybenzimidazole (PBI), la polyétheréthercétone sulfonée (SPEEK), le polyéthylène (PE), le polypropylène (PP) ou les matériaux poreux inorganiques et/ou les membranes céramiques ou les membranes céramiques polymères fabriquées en utilisant de l'oxyde d'aluminium, du dioxyde de titane, du dioxyde de zirconium, de l'oxyde de silicium et/ou du nitrite de titane, ainsi que les mélanges, les modifications ou les composites des différents matériaux de membrane support susmentionnés.

12. Utilisation de la membrane composite selon l'une quelconque des revendications 1 à 11 pour la rétention de molécules dissoutes d'un poids moléculaire inférieur à 2 000 g/mol avec un taux de rétention d'au moins 90 % en poids.

13. Utilisation selon la revendication 12 pour la séparation de systèmes catalytiques homogènes de mélanges réactionnels, pour la séparation de triglycérides de solvants d'un poids moléculaire inférieur à 200 g/mol, pour la séparation d'oligomères de solutions de monomères ou pour la séparation d'agents actifs (pharmaceutiques) ou leurs produits précurseurs de mélanges réactionnels ou de solutions.

14. Utilisation selon la revendication 13, **caractérisée en ce que** des hydrocarbures de 1 à 8 atomes de carbone, leurs isomères ou également leurs mélanges ou également du CO₂ sont utilisés en tant que solvant.

15. Utilisation selon au moins l'une quelconque des revendications 12 à 14, **caractérisée en ce que** des fractions de poids moléculaire de moins de 1 000 g/mol sont séparées à 30 °C et à une pression de 30 bar de solutions dans du n-heptane.

16. Procédé de fabrication d'une membrane composite selon au moins l'une quelconque des revendications 1 à 11, **caractérisé en ce qu'**une membrane support est revêtue avec au moins un acrylate de silicone de formule I et des mélanges de différents acrylates de silicone, puis durcie par rayonnement électromagnétique et/ou faisceau d'électrons.
